# EUROPEAN PATENT SPECIFICATION

(11) **EP 0 825 043 B1**
(45) Date of publication and mention of the grant of the patent: **05.02.2003**
(21) Application number: 97113674.2
(22) Date of filing: 07.08.1997
(51) Int. Cl.: B60G 21/073

(54) **Pressure-regulating device and suspension apparatus**
Vorrichtung zur Druckregelung und Radaufhängung
Dispositif de régulation de pression et suspension

(30) Priority: 07.08.1996 JP 20818696
(43) Date of publication of application: 25.02.1998
(73) Proprietor: YAMAHA HATSUDOKI KABUSHIKI KAISHA, Iwata-shi Shizuoka-ken, 438 (JP)
(72) Inventor: Kurachi, Makoto, Iwata-shi, Shizuoka-ken (JP); Yamamoto, Mineo, Iwata-shi, Shizuoka-ken (JP); Tsujii, Eiichirou, Iwata-shi, Shizuoka-ken (JP)
(74) Representative: Grünecker, Kinkeldey, Stockmair & Schwanhäusser Anwaltssozietät

(56) References cited:
- EP-A- 0 695 658
- DE-A- 2 406 987
- DE-A- 4 231 991
- DE-U- 9 415 009
- US-A- 4 491 207
- PATENT ABSTRACTS OF JAPAN vol. 2, no. 36 (M-011), 10 March 1978 (1978-03-10) -& JP 52 152017 A (AISIN SEIKI ET AL.), 17 December 1977 (1977-12-17)

## Description

The present invention relates to a pressure-regulating device, in particular for a vehicle suspension apparatus having two hydraulic cylinders, comprising a cylinder member with a bottom, a lid member for closing the opening of the cylinder member, said lid member having an integrally formed cylinder, said cylinder slidingly receiving a smaller diameter portion of a free piston defining with the lid member a smaller side hydraulic chamber, said free piston having a large-diameter portion slidingly received within said cylinder member and defining with said lid member a large side hydraulic chamber and with said bottom of said cylinder member another chamber, said hydraulic chambers communicating with respective hydraulic passages, in particular being connectable to said hydraulic cylinders of the vehicle suspension apparatus, and a constriction member for damping when a pressure differential develops between these hydraulic chambers, said hydraulic passages being provided in said lid member, further comprising a variable constriction member being located in a passage, which connects the two hydraulic chambers.

Such a pressure-regulating device is known from document EP 0 695 658 A2. However, the passage connecting the two hydraulic chambers and the variable constriction member of this pressure-regulating device are integrated in a highly complicated structural member having a separate housing fixed to the lid member.

An Automobile suspension apparatus utilizing a pressure-regulating device of the prior art, for example, that disclosed in Japan Patent Application JP-A-8 132 846 employed a pair of hydraulic cylinders disposed between the wheels and the vehicle body which were structured in a manner such that when those cylinders operated in the opposite direction from each other, the damping force they generated was higher than when they operated in the same direction. The prior art automobile suspension apparatus that was disclosed in that patent application disclosure is shown in Figures 5 and 6.

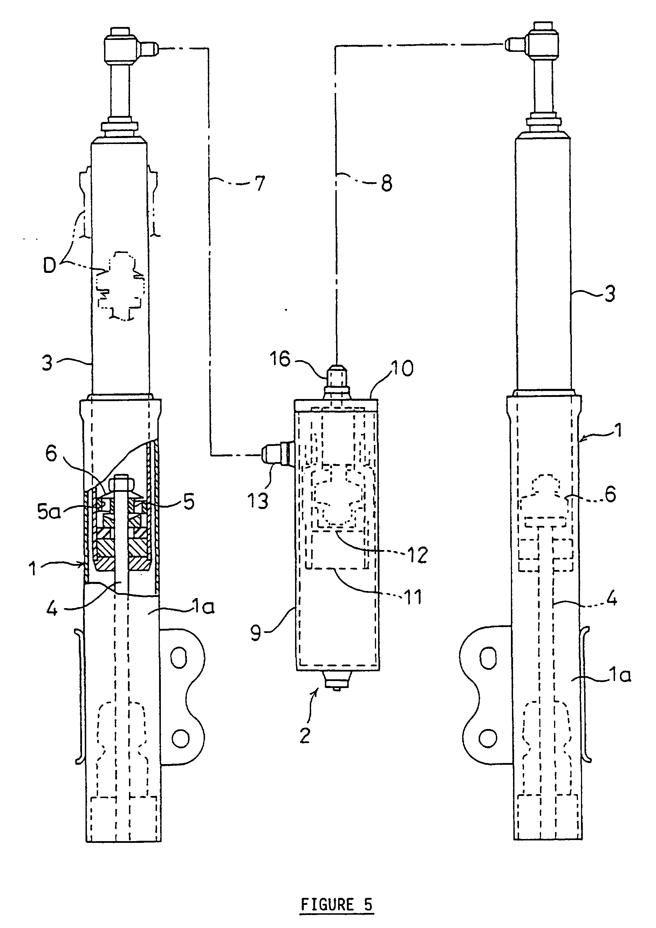

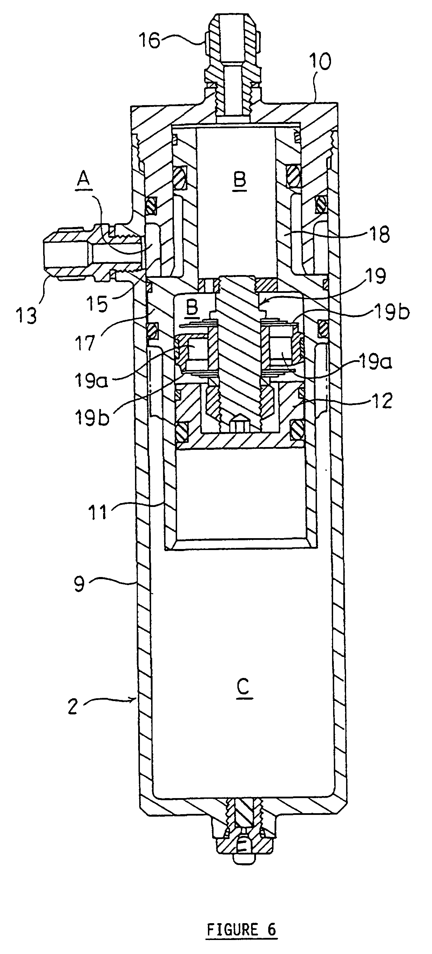

Figure 5 presents a front view of the automobile suspension apparatus of the prior art, while Figure 6 is a sectional view of the pressure-regulating cylinder. The pair of hydraulic cylinders indicated by the reference number 1 were disposed between the wheels and the body of an automobile (not shown), and these hydraulic cylinders 1, 1 were connected with a pressure-regulating cylinder 2.

Each of the foregoing hydraulic cylinders 1 comprises a cylinder member 3 inserted into the top of an outer cylinder 1a and a piston rod 4 installed in the outer cylinder 1a is attached to a piston 5. This piston 5 is slidably fitted into the cylinder member 3 in a manner such that it divides the oil chamber inside the cylinder member 3 into two chambers in the vertical direction. These oil chambers are connected to each other through a connecting hole 5a in the piston 5 and a constriction 6. The oil chambers located at the top of each hydraulic cylinder are connected to the pressure-regulating cylinder 2 by means of hydraulic lines 7, 8.

The pressure-regulating cylinder 2 is mainly composed of a cast cylinder member 9 having a bottom, a lid member 10 which closes the opening of the cylinder member 9, a free piston 11, and an auxiliary free piston 12. There is a nipple 13 attached to the foregoing cylinder member 9 near its open end to connect it with the foregoing hydraulic line 7, and a high pressure gas inlet 14 is installed in the bottom of the cylinder member. Integrally formed in the foregoing lid member 10 between it and the inside circumferential wall of the cylinder unit is a cylinder 15 that forms the oil chamber A on the large-diameter piston-side which is coaxial with the cylinder unit 9, and a nipple 16 that connects the chamber with the foregoing hydraulic line 8 is installed at the axial center.

The foregoing free piston 11 is formed overall as a cylinder with a step, thereby comprising a large-diameter piston 17 which fits into the inside circumferential area of the cylinder member 9 and a small-diameter piston 18 which fits into the inside circumferential of the foregoing cylinder 15 of the lid member 10, which are integrally formed along the same axis. A constriction member 19 is attached to the inside of the free piston 11 and the foregoing auxiliary free piston 12 is further slidably inserted therein.

The foregoing constriction member 19 has a structure which enables it to partition the inside of the large-diameter piston 17 into two chambers; the two chambers are connected to each other by a connection passage 19a and by a check valve that constitutes the constriction 19b. One of the two chambers formed by the constriction member 19 is connected to the oil chamber B on the small-diameter piston-side inside the small-diameter piston, while the other chamber is cut off from the space in the bottom inside the cylinder member 9 by means of the free piston 12. High pressure gas has been sealed inside this bottom space, which comprises the high pressure gas chamber C.

Further, this free piston 11 has been formed in a manner such that when it moves in the axial direction, the respective volume increase and volume decrease in the foregoing oil chambers A and B are of equal magnitude.

Thus, with regard to the automobile suspension apparatus of the prior art having the above configuration, when the pair of hydraulic cylinders 1, 1 on the vehicle are compressed in the same direction, for example, when each outer cylinder 1a of the two hydraulic cylinders 1 rises to the double-dot line shown in the same figure, a damping force is generated by the constriction 6, and an amount of oil equivalent to the displaced volume of the piston rod 4 inserted inside the cylinder member 3 is caused to flow out, into the hydraulic lines 7, 8. This oil then flows through the hydraulic lines 7, 8 and into the oil chamber A on the large-diameter side and oil chamber B on the small-diameter side inside the pressure-regulating cylinder 2.

At this time, if the inflow volume of oil into the two chambers A and B is the same, the free piston 11 moves downward with respect to Figure 6 in response to the amount of oil flowing in. To wit, since the oil does not flow through the constriction 19b inside the free piston 11, at this time, the only damping force generated is that from the constriction 6 of the hydraulic cylinders on the wheel side.

Also, with regard the foregoing pair of hydraulic cylinders 1, 1 on the wheel side, if the left side hydraulic cylinder 1 as shown in Figure 5 is compressed, while the right side hydraulic cylinder 1 is expanded, then the free piston 11 moves to a position that balances the amount of oil inflow into the pressure-regulating cylinder 2 with the amount of outflow, and an amount of oil corresponding to the difference between the amount of inflow and the amount of outflow passes through the passage 19a in the free piston. At this time, the damping force is generated by the constriction 19b, and the auxiliary free piston 12 moves inside the large-diameter piston 17. To wit, in this case, a damping force is generated both by the constriction in the hydraulic cylinders 1 on the wheel side and by the constriction 19b in the pressure-regulating cylinder 2.

As a result, compared to the case where the pair of hydraulic cylinders 1, 1 are operated in the same direction by the same amount, greater damping force is generated when they are operated in the same direction by in different amounts, or in opposite directions.

However, with the prior art suspension apparatus configured as described above, there are high production costs for the manufacture of the pressure-regulating cylinder 2. This results, first and foremost, from the need to form the cylinder unit 9 by casting, which increases costs for molds and adds bulk to the unit. To wit, since there must be a connection for the hydraulic line 7 formed on the outside the cylinder unit 9, the most effective means to manufacture the cylinder unit 9 was casting, but a demand exists for even further cost reductions.

The second cost factor are the many zones of the free piston 11 that require machine finishing processes. In addition to the need to form a high precision sliding surface on the outside of the large-diameter piston 17 and small-diameter piston 18, a sliding surface must also be formed on the inside circumferential surface of the large-diameter piston 17 for the auxiliary free piston 12. This auxiliary free piston 12 also brings on cost increases because its use increases the number of parts required.

Accordingly, it is an objective of the present invention to provide an improved pressure-regulating device as indicated above facilitating with simple technical means an always reliable operation and simultaneously lowers the cost of production.

According to the present invention, this objective is solved with respect to the pressure-regulating device, in which said variable constriction member located, is formed in said lid member.

Further, it is an objective of the present invention to provide a suspension apparatus comprising the features according to claim 10.

It is advantageous when said variable constriction member being adapted to be adjustable from the outside for the level of constriction.

According to a preferred embodiment of the pressure-regulating device or suspension apparatus, said constriction member being located in a passage formed in the small-diameter piston of the free piston that connects the oil chamber on the large-diameter piston-side with the oil chamber on the small-diameter piston-side, and that in the lid member a passage connects the oil chamber on the large-diameter piston-side with the hydraulic system of one of the hydraulic cylinders on the wheel side, and that a passage connects the oil chamber on the small-diameter piston-side with the hydraulic system of the other of the hydraulic cylinders on the wheel side.

According to another preferred embodiment of the present invention, within the lid member are provided a partition member that divides, in the axial direction of the free piston, the oil chamber on the small-diameter piston-side into two chambers that are linked by the constriction member, a connecting passage that connects the oil chamber on the large-diameter piston-side with the oil chamber on the small-diameter piston-side; an oil passage that connects the oil chamber on the large-diameter piston-side with the hydraulic system of one of the hydraulic cylinders on the wheel side, and an oil passage that connects the oil chamber of the small-diameter piston-side, through an opening on the end surface of the foregoing partition on the small-diameter piston-side, with the hydraulic system of the other of the foregoing hydraulic cylinders on the wheel side.

Other preferred embodiments of the present invention are laid down in further dependent claims.

The present invention makes it possible to connect both hydraulic lines to the lid member of the pressure-regulating cylinder, further making it possible to form the cylinder member into a simpler shape. Further, when the amount of oil inflow and outflow from the oil chamber on the large-diameter piston-side differs from the corresponding flows from the oil chamber on the small-diameter piston-side, the oil passes through the constriction in the small-diameter piston to flow between the two chambers, thereby requiring only one free piston in the pressure-regulating cylinder.

In the following, the present invention is explained in greater detail with respect to several embodiments thereof in conjunction with the accompanying drawings, wherein:
**Figure 1** is a front view of the pressure-regulating cylinder used in the suspension apparatus for vehicles according to a first embodiment;
**Figure 2** is a sectional enlarged view of the principal parts of the pressure-regulating cylinder.
**Figure 3** is a top view of the lid member.
**Figure 4** is a front view of the pressure-regulating cylinder of a second embodiment;
**Figure 5** is a front view of a suspension apparatus for automobiles of the prior art, and
**Figure 6** is a sectional view of a prior art pressure-regulating cylinder.

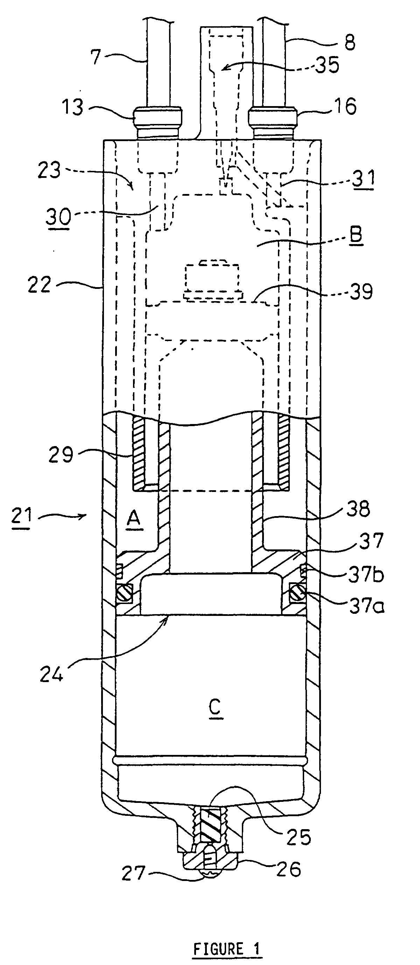

A first embodiment of a suspension apparatus for vehicles according to this invention will be described below with reference to Figures 1 through 3.

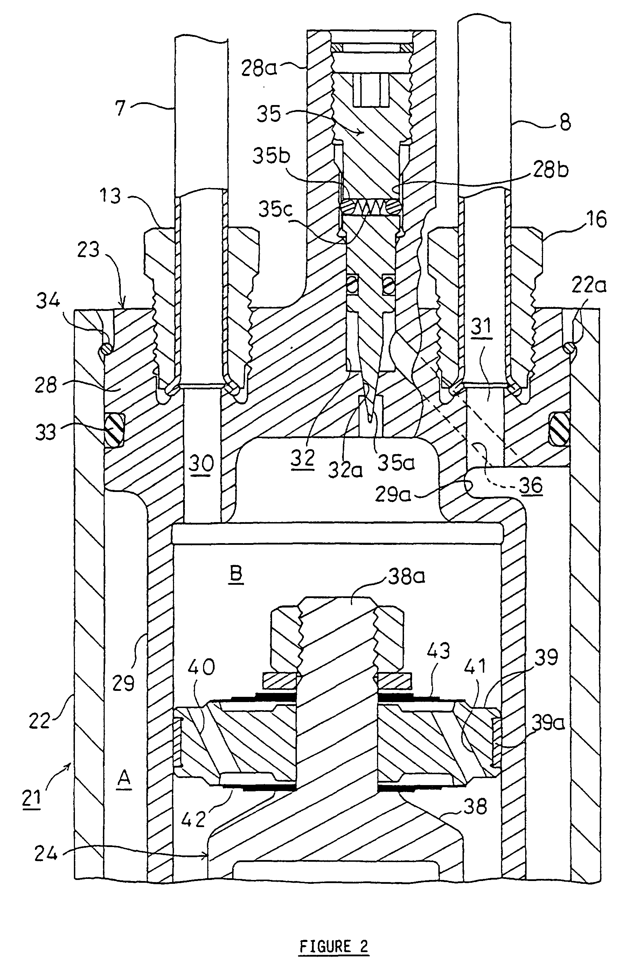

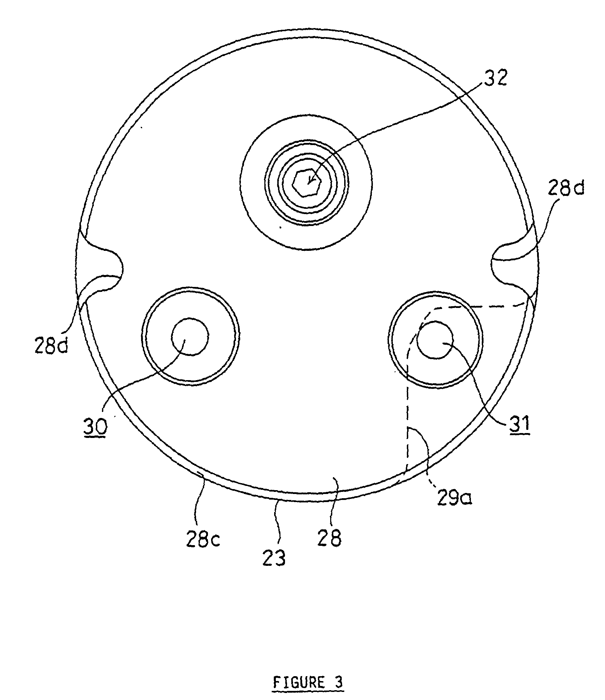

Figure 1 is a front view of the pressure-regulating cylinder used in the suspension apparatus for automobiles according to this invention. That same figure has been drawn to show the cylinder bottom-side as a cutaway. Figure 2 is a sectional view of an enlargement of the principal parts of the pressure-regulating cylinder, and Figure 3 is a top view of the lid member. In the figures, the same parts that were described for Figures 5 and 6 will bear the same reference numbers, and further explanation of them will be omitted.

In these figures, reference number 21 indicates the pressure-regulating device or cylinder that is used in the suspension apparatus of this invention. As was shown in the foregoing figure 5, this pressure-regulating cylinder 21 is connected to a pair of wheel-side hydraulic cylinders 1, 1 by means of hydraulic lines 7, 8. The foregoing pair of hydraulic cylinders 1, 1 are disposed between the left and right respective front wheels of the automobile and the auto body, and it would also be possible to use the same arrangement between the front and rear wheels. In this case, in addition to the feasibility of installation between the front and rear wheels on the same side of the vehicle, it would also be possible to install them between the front and rear wheels on opposite sides of the vehicle.

The foregoing pressure-regulating cylinder 21 is composed of a cylindrical cylinder member 22 having a bottom, a lid member 23 that closes the opening of this cylinder member 22, and a free piston 24 housed inside. The foregoing cylinder member 22 can be manufactured by closing one end of pipe stock, by cold forging to form the bottom and then polishing the inside sliding surface for the free piston. To wit, it is not necessary to use casting molds, which would raise costs.

Mounted in the bottom of the cylinder member 21 is a rubber member 25 which can be pierced by an injection needle (not shown) to inject high pressure gas (for example nitrogen gas or another inert gas) inside the bottom side air space (high pressure gas chamber C) inside the cylinder member 21. This rubber member 25 is affixed to the cylinder member 21 by a rubber holder 26 threaded onto the bottom of the cylinder member 21. The structure of the rubber holder 26 is such that its piercing passage can be closed off by a screw 27.

The foregoing lid member 23 may be produced by casting or forging and is composed of a base area 28, which closes the opening of the cylinder member 22, and an integrally formed cylinder 29 bordering the inside of the cylinder member 22. As is shown in Figure 2, the foregoing base zone 28 has an integrally formed stub 28a for attaching a variable constriction that projects toward the side opposite the cylinder member 22, and, in addition, threaded nipples 13, 16 for attaching the hydraulic lines which connect to the oil passages 30, 31, a constricted passage 32 that is bored through the foregoing stub 28a, and a circlip 34 that keeps an O-ring 33 in place around the open end of the cylinder member 22.

A variable constriction 35 which is a part of the variable constriction mechanism of the third embodiment is attached to the foregoing stub 28a. The head of this variable constriction 35 threads into the stub 28a, and the needle 35a on its front end passes through the tapered area 32a of the foregoing constricted passage 32. Midway in the axial direction of this variable constriction 35 are two balls 35b that can freely advance and retract. A compressed coil spring 35c inside the variable constriction 35 applies force that causes the balls to engage the spiraling projection 28b on the inside circumferential surface of the stub 28a. That structure makes it possible for the variable constriction 35 to be turned so that the balls 35b ride over the projection 28b to allow appropriate adjustments to be performed, while preventing the variable constriction 35 from being rotated by vibrations and the like. The foregoing circlip 34 engages the step 22a formed in the inside circumference of the open end side of the cylinder unit 22 and the step 28c (see Fig. 3) formed on the outside edge of the base. Further, there are indentations 28d formed in two places on the outside ends of the base area 28 which can serve to engage lid-member rotational stop-jigs when screwing in the nipples 13, 16 in the lid member 23, or as a tool insertion point for installing and removing the circlip 34.

The foregoing cylinder 29 is positioned on the same axis as the cylinder member 22 and moreover it is shaped to extend to the approximate center in the axial direction of the cylinder member 22 in a manner such that a cylindrically shaped oil chamber is formed between it and the inside circumferential surface of the cylinder member 22. There is an opening for the foregoing oil passage 30 and constricted passage 32 on the inside circumferential side of this cylinder 29. The other oil passage 31 opens into the indentation 29a that is formed in the base area of the cylinder 29. In addition to an opening for the oil passage 31 in this indentation 29, there is an opening for one end of the passage 36. The other end of this passage 36, passes to the opposite side of the inside end surface of the base 28 with respect to the tapered zone 32a in the foregoing constricted passage 32.

To wit, the foregoing oil passage 30 passes into the space inside the cylinder 29, and the oil passage 31 passes into the space between the cylinder 29 and the cylinder member 22 (the above described cylindrical oil chamber). Further, the space inside the cylinder 29 connects with the space between the cylinder 29 and the cylinder member 22 by means of the foregoing constricted passage 32 and the passage 36.

The foregoing free piston 24 comprises a large-diameter piston 37 that fits into the inside circumference of the cylinder member 22, a shaft 38 shaped like a closed end cylinder that extends toward the foregoing base area 28 of the lid member in the axial direction from the large-diameter piston 37, and a small-diameter piston 39 that is affixed at the front end of this shaft 38. The foregoing large-diameter piston 37 partitions the inside of the cylinder member 22 into a high pressure gas chamber C at the bottom and an oil chamber A on the large-diameter piston-side. This large-diameter piston-side oil chamber A is connected to the hydraulic system of the wheel-side hydraulic cylinder 1 by means of the foregoing oil passage 31 that runs from the space between the cylinder member 22 and the foregoing cylinder 29 and by the hydraulic line 8. 37a is an O-ring and 37b is a seal ring. The foregoing shaft 38 is integrally formed on the large-diameter piston 37, and its bottom, shown at the top of the Figure, and a pin 38a extending from the shaft 38 is retained on the small-diameter piston 39 by a threaded fastener.

The foregoing small-diameter piston 39 fits in the inside circumference of the foregoing cylinder 29 and divides it into two chambers. From among these two chambers, the one on the base 28 side of the lid member 28 contains the oil chamber B on the small-diameter piston-side which is connected to the hydraulic system of the wheel-side hydraulic cylinder 1 by means of the oil passage 30 and the hydraulic line 7. The other chamber contains a part of the oil chamber A on the large-diameter piston-side.

Further, connecting passages 40, 41 which connect the foregoing oil chambers A and B are formed in the small-diameter piston 39 and have openings on both end surfaces of the small-diameter piston 39. In addition, there are constriction members 42, 43 composed of check valves, that close the open ends of these connecting passages 40, 41. The constriction member 42 closes the opening of the connecting passage 40 on the side of the oil chamber A, and constriction member 43 closes the opening of the connecting passage 41 on the side of the oil chamber B. To wit, the constrictions allow the small-diameter piston 39 to be dual action. 39a is a seal ring.

The free piston 24 is structured in a manner such that when it moves in the axial direction, the volume increase and the volume decrease in the foregoing oil chambers A and B are equivalent.

In a vehicle suspension apparatus with the above described structure, when the pair of hydraulic cylinders 1, 1 on the wheel side are extended or compressed in the same direction, then, inside the pressure-regulating cylinder 21, the same volume of oil flows in or out of the oil chamber A on the large-diameter piston-side and oil chamber B on the small-diameter piston side. When oil flows in, the free piston 24 moves downward causing the high pressure gas in the high pressure gas chamber C to be further compressed, and when oil flows out, it rises. To wit, since no oil is flowing through the constriction in the small-diameter piston 39, at this time, the only damping force is generated by the constriction 6 in each hydraulic cylinder 1 on the wheel side.

Then, from among the pair of wheel-side hydraulic cylinders 1, 1, should the left side hydraulic cylinder 1 shown in Figure 5 be compressed and the right side hydraulic cylinder 1 be extended, when the variable constriction 35 of the pressure-regulating cylinder 21 closes the passage 32, then the free piston 24 moves to offset the inflows and outflows of oil into the pressure-regulating cylinder 21, and an amount of oil corresponding to the difference between the inflow and the outflow passes through the constriction of the small-diameter piston. At this time, a damping force is being generated both by the constrictions 6 of the hydraulic cylinders on the wheel side and by the constriction of the small-diameter piston.

As a result, more damping force is generated when the pair of hydraulic cylinders 1, 1 are each operated in different directions than when they are operated in the same direction.

Further, in the condition where there is upward movement, as shown in the Figure, and a gap develops between the needle 35a and the tapered area 32a of the constricted passage 32, since the oil passage A on the large-diameter piston-side is connected by this gap to the oil chamber B on the small-diameter piston-side, the damping force generated by the passage of oil through the constriction of the small diameter piston 39 is reduced by an amount corresponding to the force generated by the oil flow through the foregoing gap. As a result, it is possible to change the position of the variable constriction 35 in order to fine tune the damping force. This fine tuning may be performed even after the assembly of the pressure-regulating cylinder.

Accordingly, with regard to the pressure-regulating cylinder 21 with the above described structure, since the connections for the hydraulic lines 7, 8 are in the lid member 23, it is possible for the cylinder member 22 to be formed into a simple shape. Thus, as apparent from the present embodiment, it is possible to manufacture the cylinder member 22 without resorting to the use of high cost casting molds.

Further, when there is a differential in the inflows and outflows between the oil chamber A on the large-diameter piston-side and the oil chamber B on the small diameter piston-side, the oil can flow between the foregoing two oil chambers A and B through constrictions formed in the small-diameter piston 39. This enables the pressure-regulating cylinder 21 to use just one free piston while still maintaining the same functions as in the prior art.

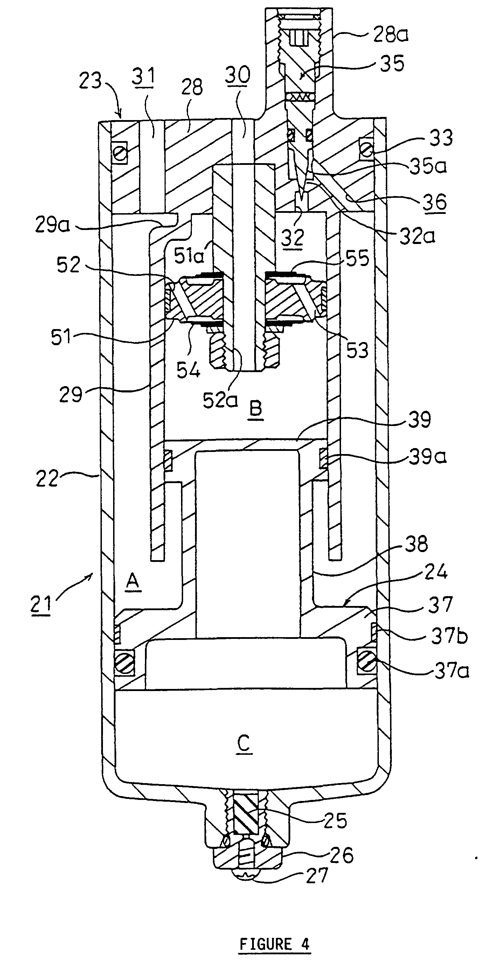

Another embodiment of an automobile suspension apparatus according to the invention will be described in detail with reference to Figure 4. Parts that correspond to those described in Figures 1 through 3 bear the same reference numbers so further detailed explanation of them will be omitted.

There is a partition member 51 attached to the lid member 23 shown in Figure 4 that divides the space between the small-diameter piston 39 and the base area 28 of the lid member 23 of the oil chamber B on the small-diameter piston-side into two chambers in the axial direction of the free piston 24. This partition member 51 is structured to conform to the partition wall of the first embodiment. The foregoing partition member 51 is threaded onto the rod 51a that extends from the lid member 23; there are two through-holes 52, 53 that connect the foregoing two chambers, and there are constriction members 54, 55 composed of check valves which close off those holes. The constriction member 54 closes the opening of the through-hole 52 on the small diameter piston-side, and the constriction member 55 closes the opening of the through-hole 52 on the base area 28 side of the lid member 23. To wit, the structure of the partition member 51 is such that the foregoing two chambers are connected to each other.

Further, a through-hole 52a is bored through the axial center of the foregoing rod 51a. This through-hole 52a serves to communicate with the passage 30 formed in the lid member 23 and with the lower of the foregoing two chambers as shown in the Figure.

The small-diameter piston 39 of the free piston 24 is shaped in this embodiment to merely axially partition the inside of the cylinder 29, and no constriction is installed.

In the present embodiment, the constricted passage 32 and the passage 36 formed in the lid member 23 constitute the connection passage of this embodiment.

Thus, with the pressure-regulating cylinder 21 structured in this way, in cases where the oil inflows or outflows differ between the oil chamber A on the large-diameter piston-side and the oil chamber B on the small-diameter piston-side, the oil flows through the constriction in the partition member 51 and through the connection passage formed by the constriction passage 32 and the passage 36. At this time, damping force is generated by the foregoing constriction and by the gap formed between the tapered area 32a and the needle 35a of variable constriction 35. This gap can be changed by adjusting the position of the variable constriction 35, thereby enabling the fine adjustment of the damping force using the variable constriction 35. This fine adjustment can be performed even after the assembly of the pressure-regulating cylinder 21.

Even when the pressure-regulating cylinder 21 is structured as shown in Figure 4, the manufacturing costs for the cylinder member 22 can be reduced, and it is possible to obtain operation that is equivalent to the prior art using but one free piston.

As has been explained above, the pressure-regulating cylinder of the suspension apparatus for vehicles according to the present invention is one which provides for a constriction located in the connecting passage in the small-diameter piston-side in the free piston of the pressure-regulating cylinder, which links the oil chamber on the large-diameter piston-side with the oil chamber on the small-diameter piston-side, and forms in the lid member of the pressure-regulating cylinder, oil passages that respectively link the oil chamber on the large-diameter piston-side and the oil chamber on the small-diameter piston-side with respective hydraulic systems of the hydraulic cylinders on the vehicle; or, in the pressure-regulating cylinder or the suspension apparatus for automobiles, formed in the lid member for the pressure-regulating cylinder, there are: a partition wall that divides the small-diameter piston chamber into two chambers, with a constriction disposed between them; a passage that connects the oil chamber on the large-diameter piston-side with the oil chamber on the small-diameter piston-side; an oil passage which allows the connection of the oil chamber on the large-diameter piston-side with the hydraulic system of one of the wheel-side hydraulic cylinders; and an oil passage that opens in the end surface on the small-diameter piston-side of the foregoing partition wall which allows the connection of the oil chamber on the small-diameter piston-side with the hydraulic system of the other of the wheel-side hydraulic cylinders. Accordingly, it is possible to connect the two hydraulic lines to the lid member of the pressure-regulating cylinder, thereby enabling the cylinder member to be of a simpler shape.

Further, in the case when the inflows and outflows of oil between the oil chamber on the large-diameter piston-side and the oil chamber on the small-diameter piston-side differ, oil passing the constriction in the small-diameter piston flows between the foregoing two oil chambers, thereby making it possible to use only one free piston in the pressure-regulating cylinder.

Accordingly, it is possible to fabricate the cylinder body for the pressure-regulating cylinder without resorting to the use of costly casting molds which add bulk to the product, thereby lowering manufacturing costs for the cylinder members.

Further, because only a single free piston is required, the area of the sliding surfaces may be decreased over the area required in the prior art, and, eliminating the need for an auxiliary free piston also reduces the manufacturing costs for the free pistons.

This makes it possible to lower the cost of manufacturing pressure-regulating cylinders, and to provide inexpensive suspension apparatus for vehicles.

A constriction mechanism that is adjustable from the outside is installed in the connecting passage in the lid member that links the oil chamber on the large-diameter piston-side with the oil chamber on the small-diameter piston-side. Accordingly, it is possible to adjust the damping force after assembly of the pressure-regulating cylinder by changing the amount of the constriction.

Thus, not only it is possible to provide suspension apparatus for vehicles that are high quality and inexpensive, but they can also be flexibly used as desired.

## Claims

1. Pressure-regulating device (21), in particular for a vehicle suspension apparatus having two hydraulic cylinders (1), comprising a cylinder member (22) with a bottom, a lid member (23) for closing the opening of the cylinder member (22), said lid member (23) having an integrally formed cylinder (29), said cylinder (29) slidingly receiving a smaller diameter portion (39) of a free piston (24) defining with the lid member (23) a smaller side hydraulic chamber (B), said free piston (24) having a large-diameter portion (37) slidingly received within said cylinder member (22) and defining with said lid member (23) a large side hydraulic chamber (A) and with said bottom of said cylinder member (22) another chamber (C), said hydraulic chambers (A, B) communicating with respective hydraulic passages (30, 31), in particular being connectable to said hydraulic cylinders (1) of the vehicle suspension apparatus, and a constriction member (42,43;54,55) for damping when a pressure differential develops between these hydraulic chambers (A,B), said hydraulic passages (30,31) being provided in said lid member (23), further comprising a variable constriction member (35) being located in a passage (32), which connects the two hydraulic chambers (A,B), **characterized in that** said passage (32), in which said variable constriction member (35) is located, is formed in the lid member (23).

2. Pressure-regulating device according to claim 1, **characterized in that** said variable constriction member (35) is adapted to be adjustable from the outside for the level of constriction.

3. Pressure-regulating device according to claim 1 or 2, **characterized in that** said constriction member (42,43) is located in a passage formed in the small-diameter portion (39) of the free piston (24) that connects the hydraulic chamber (A) on the large-diameter piston-side with the hydraulic chamber (B) on the small-diameter piston-side, and that in the lid member (23) one of said hydraulic passages (31) connects the hydraulic chamber (A) on the large-diameter piston-side with the hydraulic system of one of the hydraulic cylinders (1) on the wheel side, and that one of said hydraulic passages (30) connects the hydraulic chamber (B) on the small-diameter piston-side with the hydraulic system of the other of the hydraulic cylinders (1) on the wheel side.

4. Pressure-regulating device according to claim 1 or 2, **characterized in that** within the lid member (23) are provided a partition member (51) that divides, in the axial direction of the free piston (24), the hydraulic chamber (B) on the small-diameter piston-side into two chambers that are linked by the constriction member (54,55), a connecting passage that connects the hydraulic chamber (A) on the large-diameter piston-side with the hydraulic chamber (B) on the small-diameter piston-side; one of said hydraulic passages (31) that connects the hydraulic chamber (A) on the large-diameter piston-side with the hydraulic system of one of the hydraulic cylinders (1) on the wheel side, and one of said hydraulic passages (30) that connects the hydraulic chamber (B) of the small-diameter piston-side, through an opening (52a) on the end surface of the foregoing partition (51) on the small-diameter piston-side, with the hydraulic system of the other of the foregoing hydraulic cylinders (1) on the wheel side.

5. Pressure-regulating device according to at least one of the preceding claims 1 to 4, **characterized in that** a rubber member (25) is provided in the bottom of said pressure regulating device (21) affixed by a rubber holder (26), said rubber holder (26) being closable by a screw (27).

6. Pressure-regulating device according to at least one of the preceding claims 1 to 5, **characterized in that** said variable constriction member (35) is attached to a stub (28a) provided on the lid member (23), a needle (35a) of said variable constriction member (35) is adapted to pass through a tapered area (32a) of said passage (32) between the hydraulic chambers (A,B).

7. Pressure-regulating device according to at least one of the preceding claims 1 to 3, 5 and 6, **characterized in that** the free piston (24) comprises a shaft (38) shaped like a closed end cylinder that extends to a base area (28) of the lid member (23) in the axial direction from the large-diameter portion (37) and the small-diameter portion (39) is affixed to the front end of this shaft (38) which is integrally formed with said free piston (24).

8. Pressure-regulating device according to at least one of the preceding claims 1 to 7, **characterized in that** said constriction member is composed of check valves (42,43;54,55).

9. Pressure-regulating device according to at least one of the preceding claims 4 to 8, **characterized in that** the partition member (51) is connected to a rod (51a) extending from the lid member (23).

10. Suspension apparatus, in particular for vehicles, comprising a pair of hydraulic cylinders (1) on the wheel side, which are disposable between the wheels and the body, and a pressure-regulating device (21) according to one of the preceding claims.

## Patentansprüche

1. Druckregulierungsvorrichtung (21), insbesondere für eine Fahrzeugaufhängungsvorrichtung, die zwei Hydraulikzylinder (1) hat, mit einem Zylinderteil (22), mit einem Boden, einem Deckelteil (23), um die Öffnung des Zylinderteiles (22) zu schließen, wobei das Deckelteil (23) einen einstückig gebildeten Zylinder (29) hat, der Zylinder (29) gleitend einen kleinen Durchmesserabschnitt (39) eines freien Kolbens (24) aufnimmt, der mit dem Deckelteil (23) die kleinere Seite einer Hydraulikkammer (B) bildet, wobei der freie Kolben (24) einen Abschnitt (37) mit großem Durchmesser hat, gleitend innerhalb des Zylinderteiles (22) aufgenommen und mit dem Deckelteil (23) eine große Seite einer Hydraulikkammer (A) bildet und mit dem Boden des Zylinderteiles (22) eine weitere Kammer (C ) bildet, wobei die Hydraulikkammern (A, B) in Verbindung mit jeweiligen Hydraulikdurchgängen (30, 31) sind, die insbesondere verbindbar mit den Hydraulikzylindern (1) der Fahrzeugaufhängungsvorrichtung sind, und mit einem Verengungsteil (42, 43; 54, 55), um zu dämpfen, wenn sich eine Druckdifferenz zwischen diesen Hydraulikkammern (A, B) entwickelt, wobei die Hydraulikdurchgänge (30, 31) in dem Deckelteil (23) vorgesehen sind, außerdem mit einem veränderbaren Verengungsteil (35), das in einem Durchgang (32) angeordnet ist, der die zwei Hydraulikkammern (A, B) verbindet, **dadurch gekennzeichnet, dass** der Durchgang (32), in dem das veränderbare Verengungsteil (35) angeordnet ist, in dem Deckelteil (23) gebildet ist.

2. Druckregulierungsvorrichtung nach Anspruch 1, **dadurch gekennzeichnet, dass** das veränderbare Verengungsteil (35) vorgesehen ist, um von außen auf den Grad der Verengung einstellbar zu sein.

3. Druckregulierungsvorrichtung nach Anspruch 1 oder 2, **dadurch gekennzeichnet, dass** das Verengungsteil (42, 43) in einem Durchgang, gebildet in dem Abschnitt (39) des freien Kolbens (24) mit kleinem Durchmesser angeordnet ist, der die Hydraulikkammer (A) auf der Seite des Kolbens mit großem Durchmesser mit der Hydraulikkammer (B) auf der Seite des Kolbens mit kleinem Durchmesser verbindet, und daß in dem Deckelteil (23) einer der Hydraulikdurchgänge (31) die Hydraulikkammer (A) auf der Seite des Kolbens mit großem Durchmesser mit dem Hydrauliksystem von einem der Hydraulikzylinder (1) auf der Radseite verbindet und dass einer der Hydraulikdurchgänge (30) die Hydraulikkammer (B) auf der Seite des Kolbens mit kleinem Durchmesser mit dem Hydrauliksystem des anderen der Hydraulikzylinder (1) auf der Radseite verbindet.

4. Druckregulierungsvorrichtung nach Anspruch 1 oder 2, **dadurch gekennzeichnet, dass** innerhalb des Deckelteiles (23) vorgesehen sind ein Unterteilungsteil (51), das in der axialen Richtung des freien Kolbens (24) die Hydraulikkammer (B) auf der Seite des Kolbens mit kleinem Durchmesser in zwei Kammern, die durch das Verengungsteil (54, 55) verbunden sind, unterteilt, ein Verbindungsdurchgang, der die Hydraulikkammer (A) auf der Seite des Kolbens mit großem Durchmesser mit der Hydraulikkammer (B) auf der Seite des Kolbens mit kleinem Durchmesser verbindet; einer der Hydraulikdurchgänge (31), der die Hydraulikkammer (A) auf der Seite des Kolbens mit großem Durchmesser mit dem Hydrauliksystem eines der Hydraulikzylinder (1) auf der Radseite verbindet, und einer der Hydraulikdurchgänge (30), der die Hydraulikkammer (B) auf der Seite des Kolbens mit kleinem Durchmesser verbindet, durch eine Öffnung (52a) auf der Endoberfläche des vorhergehenden Unterteilungsteiles (51) auf der Seite des Kolbens mit kleinem Durchmesser mit dem Hydrauliksystem des anderen des vorhergehenden Zylinders (1) auf der Radseite verbindet.

5. Druckregulierungsvorrichtung nach zumindest einem der vorhergehenden Ansprüche 1 bis 4, **dadurch gekennzeichnet, dass** ein Gummiteil (25) in dem Boden der Druckregulierungsvorrichtung (21) vorgesehen ist, befestigt durch einen Gummihalter (26), wobei der Gummihalter (26) durch eine Schraube (27) verschließbar ist.

6. Druckregulierungsvorrichtung nach zumindest einem der vorhergehenden Ansprüche 1 bis 5, **dadurch gekennzeichnet, dass** das veränderbare Verengungsteil (35) mit einem Zapfen (28a) verbunden ist, vorgesehen an dem Deckelteil (23), wobei eine Nadel (35a) des veränderbaren Verengungsteiles (35) vorgesehen ist durch einen konischen Bereich (32a) des Durchganges (32) zwischen den Hydraulikkammern (A, B) durchzugehen.

7. Druckregulierungsvorrichtung nach zumindest einem der vorhergehenden Ansprüche 1 bis 3, 5 und 6, **dadurch gekennzeichnet, dass** der freie Kolben (24) eine Welle (38) aufweist, geformt wie ein Zylinder mit geschlossenem Ende, die sich zu einem Grundbereich (28) des Deckelteiles (23) in der axialen Richtung von dem Abschnitt (37) mit großem Durchmesser erstreckt und der Abschnitt mit kleinem Durchmesser (39) mit dem vorderen Ende dieser Welle (38), die einstückig mit dem freien Kolben (24) gebildet ist, befestigt ist.

8. Druckregulierungsvorrichtung nach zumindest einem der vorhergehenden Ansprüche 1 bis 7, **dadurch gekennzeichnet, dass** das Verengungsteil aus Rückschlagventilen (42, 43; 54, 55) gebildet ist.

9. Druckregulierungsvorrichtung nach zumindest einem der vorhergehenden Ansprüche 4 bis 8, **dadurch gekennzeichnet, dass** das Unterteilungsteil (51) mit einer Stange (51a), die sich von dem Deckelteil (23) erstreckt, verbunden ist.

10. Aufhängungsvorrichtung, insbesondere für Fahrzeuge, mit einem Paar von Hydraulikzylindern (1) auf der Radseite, die zwischen den Rädern und der Karosserie anordenbar sind, und eine Druckregulierungsvorrichtung (21) nach einem der vorhergehenden Ansprüche.

## Revendications

1. Dispositif de régulation de pression (21), en particulier pour un dispositif de suspension d'un véhicule comportant deux cylindres hydrauliques (1), comprenant un élément formant cylindre (22) avec une partie inférieure, un élément formant couvercle (23) pour fermer l'ouverture de l'élément formant cylindre (22), ledit élément formant couvercle (23) comprenant un cylindre formé intégralement (29), ledit cylindre (29) recevant de manière coulissante une partie de diamètre plus petit (39) d'un piston libre (24) définissant avec l'élément formant couvercle (23) une chambre hydraulique latérale plus petite (B), ledit piston libre (24) ayant une partie de grand diamètre (37) reçue de manière coulissante dans ledit élément formant cylindre (22) et définissant avec ledit élément formant couvercle (23) une grande chambre hydraulique latérale (A) et avec ladite partie inférieure dudit élément formant cylindre (22) une autre chambre (C), lesdites chambres hydrauliques (A, B) communiquant avec des passages hydrauliques respectifs (30, 31), en particulier pouvant être raccordés auxdits cylindres hydrauliques (1) du dispositif de suspension de véhicule et un élément de rétrécissement (42, 43 ; 54, 55) pour amortir lorsqu'une pression différentielle se développe entre ces chambres hydrauliques (A, B), lesdits passages hydrauliques (30, 31) étant prévus dans ledit élément formant couvercle (23), comprenant en outre un élément de rétrécissement variable (35) étant situé dans un passage (32) qui raccorde les deux chambres hydrauliques (A, B), **caractérisé en ce que** ledit passage (32), dans lequel ledit élément de rétrécissement variable (35) est situé, est formé dans l'élément formant couvercle (23).

2. Dispositif de régulation de pression selon la revendication 1, **caractérisé en ce que** ledit élément de rétrécissement variable (35) est adapté pour être réglable à partir de l'extérieur pour le niveau de rétrécissement.

3. Dispositif de régulation de pression selon la revendication 1 ou 2, **caractérisé en ce que** ledit élément de rétrécissement (42, 43) est placé dans un passage formé dans la partie de petit diamètre (39) du piston libre (24) qui raccorde la chambre hydraulique (A) sur le côté du piston de grand diamètre avec la chambre hydraulique (B) sur le côté de piston de petit diamètre, et **en ce que** dans l'élément formant couvercle (23) l'un desdits passages hydrauliques (31) raccorde la chambre hydraulique (A) sur le côté de piston de grand diamètre avec le système hydraulique de l'un des cylindres hydrauliques (1) sur le côté de la roue, et **en ce que** l'un desdits passages hydrauliques (30) raccorde la chambre hydraulique (B) sur le côté de piston de petit diamètre avec le système hydraulique de l'autre des cylindres hydrauliques (1) sur le côté de la roue.

4. Dispositif de régulation de pression selon la revendication 1 ou 2, **caractérisé en ce que** dans l'élément formant couvercle (23) sont prévus un élément formant cloison (51) qui divise, dans le sens axial du piston libre (24), la chambre hydraulique (B) sur le côté de piston à petit diamètre en deux chambres qui sont reliées par l'élément de rétrécissement (54, 55), un passage de raccordement qui raccorde la chambre hydraulique (A) sur le côté de piston de grand diamètre avec la chambre hydraulique (B) sur le côté de piston de petit diamètre ; l'un desdits passages hydrauliques (31) qui raccorde la chambre hydraulique (A) sur le côté de piston de grand diamètre avec le système hydraulique de l'un des cylindres hydrauliques (1) sur le côté de la roue, et l'un desdits passages hydrauliques (30) qui raccorde la chambre hydraulique (B) du côté de piston de petit diamètre, à travers une ouverture (52a) sur la surface d'extrémité de la cloison précédente (51) du côté de piston de petit diamètre, avec le système hydraulique de l'autre des cylindres hydrauliques précédents (1) sur le côté de la roue.

5. Dispositif de régulation de pression selon au moins l'une des revendications précédentes 1 à 4, **caractérisé en ce qu'**un élément en caoutchouc (25) est prévu au bas dudit dispositif de régulation de pression (21) fixé par un support en caoutchouc (26), ledit support en caoutchouc (26) pouvant être fermé par une vis (27).

6. Dispositif de régulation de pression selon au moins l'une des revendications précédentes 1 à 5, **caractérisé en ce que** ledit élément de rétrécissement variable (35) est fixé à une embase (28a) prévue sur l'élément formant couvercle (23), une aiguille (35a) dudit élément de rétrécissement variable (35) est adaptée pour passer à travers une zone conique (32a) dudit passage (32) entre les chambres hydrauliques (A, B).

7. Dispositif de régulation de pression selon au moins l'une des revendications précédentes 1 à 3, 5 et 6, **caractérisé en ce que** le piston libre (24) comprend un arbre (38) façonné comme un cylindre à extrémité fermée qui s'étend vers une zone de base (28) de l'élément formant couvercle (23) dans le sens axial depuis la partie de grand diamètre (37) et la partie de petit diamètre (39) est fixée à l'extrémité avant de cet arbre (38) qui est formé d'un seul tenant avec ledit piston libre (24).

8. Dispositif de régulation de pression selon au moins l'une des revendications précédentes 1 à 7, **caractérisé en ce que** ledit élément de restriction est composé de clapets anti-retour (42, 43 ; 54, 54).

9. Dispositif de régulation de pression selon au moins l'une des revendications précédentes 4 à 8, **caractérisé en ce que** l'élément formant cloison (51) est raccordé à une tige (51a) s'étendant depuis l'élément formant couvercle (23).

10. Dispositif de suspension, en particulier pour véhicules, comprenant une paire de cylindres hydrauliques (1) sur le côté de la roue, qui peuvent être disposés entre les roues et la carrosserie, et dispositif de régulation de pression (21) selon l'une des revendications précédentes.
